# EUROPEAN PATENT SPECIFICATION

(11) **EP 3 328 696 B1**
(45) Date of publication and mention of the grant of the patent: **30.12.2020**
(21) Application number: 15781722.2
(22) Date of filing: 27.07.2015
(51) Int. Cl.: B60T 13/58, B60T 13/66, B60T 13/68, B60T 13/74

(54) **BRAKE ARRANGEMENT COMPRISING HYBRID BRAKE ACTUATORS**
BREMSANORDNUNG MIT HYBRIDEN BREMSZYLINDERN
AGENCEMENT DE FREIN COMPRENANT DES ACTIONNEURS DE FREINS HYBRIDES

(43) Date of publication of application: 06.06.2018
(73) Proprietor: Volvo Truck Corporation, 405 08 Göteborg (SE)
(72) Inventor: FARRES, Lionel, F-38540 Heyrieux (FR); LONG, Christophe, F-69126 Brindas (FR)
(74) Representative: Plasseraud IP
(86) International application number: PCT/IB2015/001812
(87) International publication number: WO 2017/017491

(56) References cited:
- WO-A1-2013/093545
- US-A1- 2009 189 438
- US-A1- 2011 144 855
- US-B2- 9 022 488

## Description

The present invention is directed to a braking system of a vehicle, comprising braking actuators supplied by two different sources of energy. In particular, the braking actuators hereby described may be supplied by one or more of pressurized air and electrical power. The braking system of the present invention further comprises two separate electronic control units (ECU) which allow optimizing the source of braking energy according to the running conditions of the vehicle, and more particularly, under degraded running conditions.

### Background

Pneumatic brake actuators are commonly used on industrial vehicles. For safety purpose, backup pneumatic systems and several recipients of pressurized air are necessary, which increase the global weight of the braking system. In addition, in case of failure or air leakage, the backup systems do not always allow to brake all the wheels of the vehicle. Thus, an emergency braking action may lack control.

Hybrid brake actuators are known, also called bi-energy brake actuators, which can be activated by two different sources of energy. This kind of brake actuators are for example described in WO03014588 and WO2008030204. A method of activating these brake actuators is in addition described in the patent application PCT/EP2014/001813. However, although the electrical management of the brakes may compensate some failure of the pneumatic system, the pneumatic backup system still remains in the currently used systems. US9022488 describes a system in which there are two braking device, and in case of a failure in one of them, the vehicle can be braked automatically by means of the other braking device.

It is therefore the aim of the present invention to provide an improved brake arrangement. In particular, the object is to replace the pneumatic backup elements, partly or completely, by electrical elements, which allow a safe braking in case of degraded conditions. It is also the object of the present invention to optimize the size of the pneumatic system, in order to limit the weight and the overall energy consumption of the vehicle.

### Summary of the invention

The braking system of the present invention comprises an electrical power supply unit, a compressed air supply unit, at least one bi-energy brake actuator, which can be activated by any one of an electrical power supply unit and a compressed air supply unit or by both, simultaneously. The braking system further comprises a first and a second electronic control unit (ECU) both supplied by the electrical power supply unit. The first ECU is connected to, and provides power to the electrical actuator of the bi-energy brake actuators. It is further connected to the electrical parking brake hand control, the brake pedal sensor module, and to one or more wheel sensors. It may further be connected to a trailer control module (TCM).

The second ECU is connected to one or more brake system modules (EBS), and the brake pedal sensor module. It controls the pneumatic activation of the bi-energy brake actuators. The second ECU controls and provides electrical power to the electronic brake system module (EBS), the brake pedal module, and optionally to the air production module (APM). The electrical power supply unit comprises two distinct sources of electrical energy. It is electrically connected to both the first ECU and the second ECU.

The compressed air supply unit comprises an air reservoir, preferably a single air reservoir dedicated to all the brake actuators of the vehicle, including the bi-energy brake actuators. In particular, the air reservoir is connected to the front and the rear axles of the vehicle, and optionally to additional axles. The air reservoir may further be connected to pneumatic or hybrid brake actuators of a trailer or a semi-trailer. The air reservoir, or air tank, is fed with compressed air by the mean of a compressor. The compressed air supply unit may further comprise air cleaner, air desiccator, and/or any other device able to purify the air. The compressed air supply unit optionally comprises a trailer control module (TCM). The compressed air supply unit may further be connected to one or more electronic brake system module (EBS), which can be either single or double.

Some brake system elements may be connected to a high speed data bus. In particular, one or more of the power supply unit, the first and the second ECUs, the electronic brake system modules (EBS), and the trailer control module, can be connected to a vehicle data bus, which may further be connected to other sensors, such as a continuous clutch pedal sensor, one or more door switch sensors, or an accelerator pedal sensor.

Further, the first and the second ECUs are directly connected to each other through a dedicated circuit. Such a direct connection improves the management of a concomitant activation of the brake actuators with the electrical power and the pneumatic energy.

According to claim 1 of the invention, the present braking arrangement comprises at least one bi-energy brake actuator wherein each "bi-energy" brake actuator 3 of the vehicle V includes a pneumatic brake actuator 3a and an electric brake actuator 3b that can act both on a brake caliper 3c. More precisely, the pneumatic brake actuator 3a and the electric brake actuator 3b generate respectively an effort E3a and E3b that can be applied on a transfer module 3d. E3a denotes the effort transmitted via the transfer module 3d to the brake caliper 3c. E3 is the sum of the efforts E3a and E3b, which means that the transfer plate 3d allows adding up the efforts delivered by the actuators 3a and 3b.

According to claim 11, the present invention also encompasses a method of managing the bi-energy brake actuators in case of failure of the service brake system, either with the pneumatic circuit or the electrical circuit.

The invention also comprises a vehicle equipped with the braking system hereby described.

### Brief description of the drawings:

Figure 1: example of a truck comprising bi-energy brake actuators
Figure 2: Scheme of a bi-energy brake actuator
Figure 3: General architecture of the brake system comprising bi-energy brake actuators
Figure 4: examples of failure circumvented by the brake arrangement comprising bi-energy brake actuators
Figure 5: example of a first specific brake arrangement
Figure 6: example of a second specific brake arrangement
Figure 7: example of a third specific brake arrangement
Figure 8: example of a fourth specific brake arrangement

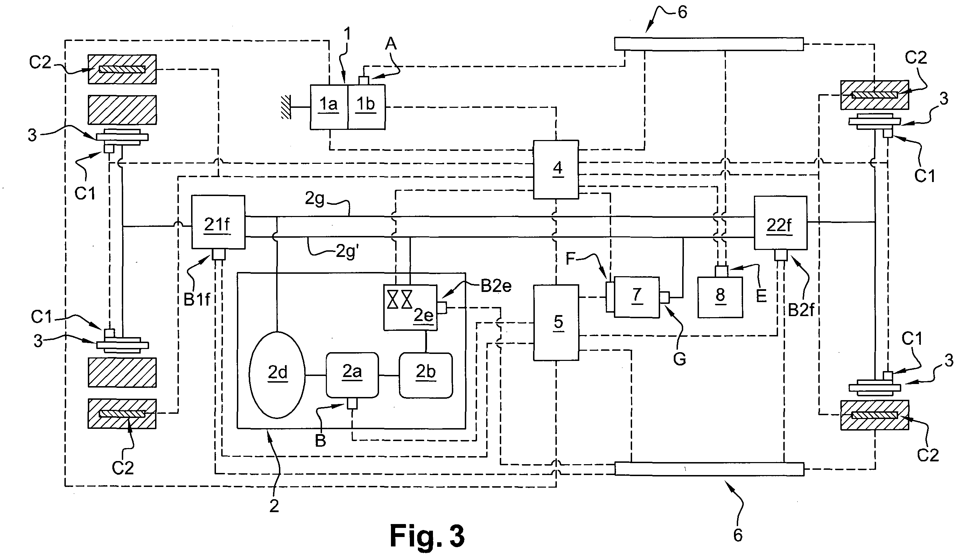

In figures 3, 4, 5, 6, 7, and 8, the connections which are represented by plain lines correspond to fluidic connections, and in particular to pneumatic connections. The connections represented by dotted lines correspond to electrical connections. Such electrical connections indicate the transmission of electrical power or information, or both.

### Detailed description

A general braking arrangement is described in Figure 3. In particular; the braking arrangement of the present invention comprises :
- an electrical power supply unit **1,**
- a compressed air supply unit **2**
- a brake pedal **7,**
- an electro mechanic parking brake handle **8,**
- at least one bi-energy brake actuator **3,**
- a first electronic control unit (ECU) **4,**
- a second electronic control unit (ECU) **5,**

The electrical power supply unit **1** comprises a first electrical power device **1a,** and a second electrical power device **1b.** The first and second electrical power devices may be two distinct batteries, which can be either disconnected from one another or interconnected. The two batteries are preferably connected to each other, either directly or through a DC/DC transfer module allowing the transfer of electricity from one to the other. One or both electrical power devices **1a** and **1b** may be fed by the electrical system of the vehicle **V.** The electrical system of the vehicle V can comprise an alternator driven by the vehicle engine (not shown), or can be a driving battery in case of a hybrid or electrical vehicle. One or more of the electrical power devices **1a** and **1b** of the power supply unit **1** may be provided with an electrical supply sensor **A,** which monitors the state of charge of the corresponding electrical power devices **1a** and **1b** and/or their ability to deliver electrical power. The electrical supply sensor **A** is connected to the high speed data bus **6** of the vehicle **V.** In such a way, a low level of electrical energy may induce a warning signal to the driver. The electrical sensor **A,** through the connection to the high speed data bus **6,** may alternatively or in addition trigger changes of setting within the brake system. The double source of electrical power, comprising a first electrical power device **1a** and a second electrical power device **1b,** ensures that electrical power is always available for the brake activation. Any other configuration may be used as long as the electrical power supply unit **1** comprises two distinct sources of electrical power. For example, the first electrical power device **1a** may be the main battery of the vehicle **V,** or an auxiliary battery, and the second electrical power device **1b** may be a backup battery, exclusively dedicated to the electrical power supply unit **1.** In a preferred configuration, the first electrical power device 1a is the living battery, also used for other electrical accessories of the vehicle V, and the second electrical power device 1b, used as a backup, corresponds to the cranking battery of the vehicle V.

The electrical power supply unit **1** is connected to 2 distinct ECU **4** and ECU **5.** Both electrical power devices **1a** and **1b** are preferably connected to the first ECU **4.** Only one of the two electrical power devices 1a and 1b is advantageously connected to the second ECU 5. Both power devices **1a** or **1b** are interconnected in such a way that electrical energy can be transferred from one to the other.

The compressed air supply unit **2** comprises an air production module (APM) **2a,** which usually comprises an air distribution module (not shown) and one or more filtration modules (not shown). The air production module **2a** may be provided with an air supply sensor **B,** which allows to determine the availability of the compressed air within the brake system. The air supply sensor **B** is preferably connected to the high speed data bus **6,** in such a way that it can transmit information related to the available air pressure, which may be computed with other parameters monitored within the vehicle **V.**

The compressed air supply unit **2** further comprises a compressor **2b,** which maintains the air pressure in a reservoir **2d** between a cut-in and a cut-off pressure value. The reservoir 2d is preferably exclusively dedicated to the brake system of the vehicle. The other equipment of the vehicle which necessitates compressed air, such as the suspension or the gear box, may be supplied by a separate reservoir (not shown). The compressor 2d is appropriate to supply the air reservoir dedicated to the brake system with air compressed at a pressure of around 12.5 bars. The pressurized air reservoir **2d,** is in fluidic connection with all the pneumatic brake actuators of the vehicle V, including the pneumatic actuators **3a** of the hybrid actuators **3.** In a vehicle **V** comprising the braking arrangement hereby described, the volume of air dedicated to the brake system may be optimized, and in particular decreased, compared to the same vehicle with a traditional pneumatic brake arrangement. Since the braking energy is provided by both pneumatic actuators **3a** and electric brake actuators **3b,** the amount of pressurized air necessary for braking the vehicle **V** is minimized compared to a traditional pneumatic brake actuator. Depending on the adopted ratio between the pneumatic energy and the electrical energy, and/or the number of hybrid brake actuators **3** within the vehicle **V,** the air volume dedicated to the brake system may be comprised between 120 L and 40 L. In particular, an air volume comprised between about 100 L and 60 L appears to be particularly convenient. This value is of course indicative and may easily be adapted according to the type of the vehicle. The compressed air volume of the present braking arrangement can thus be decreased with respect to the compressed air volume of a corresponding traditional pneumatic braking system by an amount equal or higher than about 10% or 20% or 50%, depending on the configuration. The present braking system also allows the downsizing of the compressor **2b** accordingly.

It has to be noted that the present braking system allows still complying with the regulations. In particular, the pressure and amount of compressed air, combined with the activation of the bi-energy brake actuators, allow to brake the vehicle V according to the requirements.

The compressed air supply unit **2** supplies compressed air to the pneumatic brake actuators (3a, 10) by the mean of a pipe assembly ***2g*.** The pressure of the air may be modulated by one or more electronic brake system (EBS) modules **(21f, 22f)** or brake pressure modulators, which distributes and regulates the air pressure to the pneumatic brake actuators (3a, 10). Each electronic brake system module **21f, 22f** is preferably dedicated to one axle of the vehicle **V.** It allows to modulate the pressure level delivered to the brake actuators of an axle. In particular, the air pressure delivered to a rear axle is managed by a first electronic brake system (EBS) module **21f,** and the air pressure delivered to a front axle is managed by a second electronic brake system (EBS) module **22f.** It is contemplated that in case the vehicle **V** comprises more than 2 axles, each axle may be provided with a specific electronic brake system module **2xf,** wherein x denotes the axle number. Each electronic brake system module **21f, 22f** may be optionally provided with a pneumatic backup circuit, or valve, in order to circumvent or overcome potential defects. Each of the electronic brake system module may be single, meaning that it distributes the same air pressure to both brake actuators of an axle, or double, in such a way that air pressure may be different for two opposite wheels of an axle. Either single or double, the electronic brake system modules may further be provided with ABS valves. In the frame of the present brake arrangement, an EBS module **21f, 22f** connected to an axle wherein the wheels are equipped with a bi-energy brake actuator 3, is advantageously a single EBS module. Also, where an axle is equipped with a pair of bi-energy brake actuators 3, the corresponding electronic braking system module is advantageously without pneumatic backup valve. Alternatively or in addition, an EBS module does not comprise ABS valves if it relates to an axle wherein the wheels are provided with a bi-energy actuator 3. Thus, in a preferred arrangement, the EBS module or modules related to an axle or axles comprising bi-energy brake actuators 3 are single, without pneumatic backup valve, and without ABS valves, and the EBS module or modules related to axles equipped with traditional pneumatic brake actuators 10 comprise one or more of a backup valve, and ABS valves.

In another preferred arrangement, the EBS module or modules related to an axle or axles comprising bi-energy brake actuators 3 are single, without pneumatic backup valves, and without ABS valves, and the EBS module or modules related to axles equipped with traditional pneumatic brake actuators 10 are double EBS.

It should be noted that the present braking arrangement is not limited to one specific configuration. It may for example comprise a combination of one or more double EBS modules and single EBS modules, wherein any one of double or single EBS module may or may not comprise pneumatic backup valves, or ABS valves.

The electronic brake system modules **21f** and **22f,** may be each provided with the corresponding pneumatic pressure sensors **B1f** and **B2f,** which allow to determine the pressure level distributed to the brake actuators. Each of the electronic brake system module **21f, 22f** is preferably connected to a high speed data bus **6,** to transmit information related to the air pressure monitored by the pressure sensors **B1f** and **B2f.** Discrepancies between the air pressure values monitored by the air supply sensor **B** and one or more of the pressure sensors **B1f** or **B2f** may thus be identified through the computation of the data transmitted to the high speed data bus **6.** In case of divergent pressure measurements, the corresponding electrical brake actuators **3b** may be suitably activated or over-activated, by the mean of the electrical power supply unit **1.**

The electronic brake system modules **21f** and **22f** can be directly connected to the second ECU **5.** Alternatively, the electronic brake system modules 21f, 22f, communicate with the second ECU 5 through the high speed data bus 6.

In addition, the compressed air supply unit **2** may optionally contain a trailer control module (TCM) **2e,** comprising a pressure sensor **B2e.** The trailer control module **2e** is supplied in compressed air by the compressor **2b..** When present, the TCM **2e** is preferably directly connected to the first ECU **4.** The TCM **2e** may alternatively be connected to the high speed data bus **6** of the vehicle **V.**

The compressor **2b** feeds the reservoir **2d** and the TCM **2e,** if any, with compressed air, by the mean of dedicated pipes assembly ***2g*.** The pipe assembly ***2g*** further allows fluidic connection between the reservoir **2d** and the pneumatic brake actuators (3a, 10). The pipe assembly may supply one or more EBS modules (21f, 22f). The reservoir **2d** is therefore in fluidic connection with all the brake actuators of the vehicle V, including the bi-energy brake actuators 3. In particular, a single compressed air reservoir **2d** supplies air to the front brake actuators as well as to the rear brake actuators of the vehicle **V,** and any potential brake actuators of additional axles. On optional pipe assembly 2g' may be arranged to provide a pneumatic backup line. For example, the backup line *2g'* can be connected to the TCM 2e, if any, or directly to the compressor 2b, to supply compressed air to the pneumatic brake actuators (3a, 10).The backup pipe assembly *2g*' can further be in fluidic connection with the brake pedal and one or more EBS modules (21f, 22f).

The wheels of the vehicle V, including the wheels equipped with the hybrid brake actuators **3** may be provided with a wheel speed sensor **C2,** designed to monitor the speed of rotation of the wheels. The wheel speed sensors **C2** are preferably directly connected to the first ECU **4.** The sensors **C2** may alternatively be connected to the high speed data bus **6.**

The present braking system may further comprise an electro mechanic parking brake (EPB) handle **8** provided with a sensor **E.** The sensor **E** allows to determine the position of the park brake handle **8** and activate the park brakes accordingly. The sensor **E** may be directly connected to the first ECU **4** or to the high speed data bus **6** of the vehicle **V.**

The braking system of the present invention further comprises an electromechanical braking pedal **7,** provided with a brake pedal sensor module **F,** comprising 2 sensors (not shown), both involved in the determination of the brake pedal position. The brake pedal sensor module **F** is directly connected to both the first ECU **4,** and second ECU **5.** The brake pedal **7** is advantageously not provided with a pneumatic backup connection. In other words, the air pipe assembly ***2g*,** do not supply compressed air to the brake pedal system.

Above and below, the terms "directly connected" should be understood as a direct connection between two separate elements, which allows to exchange electrical power as well as information. Such a direct connection allows a fast communication between the connected elements. Elements which are "directly connected" may optionally further be connected through the high speed data bus **6.**

The first ECU **4** is mainly dedicated to the control and activation of the bi-energy actuators **3** through the electrical actuators **3b,** whereas the second ECU **5** is mainly involved in the control and activation of the pneumatic brake actuators, including the pneumatic brake actuators **3a** of the bi-energy brake actuators **3.** The first ECU **4** is therefore preferably connected to the electrical brake actuators **3b** of the bi-energy brake actuators **3,** to the sensors **C1, C2, F** and **E.** ECU **4** may further be connected to the TCM **2e.** The second ECU **5** is preferably connected to the pneumatic actuator **3a,** to other traditional pneumatic actuators 10, if any, to the electronic brake systems modules **21f** and **22f,** and to the brake pedal sensor module **F.** ECU **5** is optionally connected to the air production module **2a.** The first ECU **4,** and the second ECU **5** are advantageously interconnected, in such a way that they can directly exchange information. In addition, one or both ECU **4** and ECU **5** can be connected to the high speed data bus 6 of the vehicle **V.**

The first ECU **4** and the second ECU **5** are both connected to the brake pedal **7** through the brake pedal sensor module **F.** In such a way, the brake activation, through the brake pedal depression, activates both ECUs **4** and **5** and thus, the activation of the brake actuators **3** potentially with both electrical energy and pneumatic energy. Depending on the running conditions, the relative power of the electrical actuator **3b** and the pneumatic actuator **3a** on the brake caliper **3c** may be optimized. The inter-connection of the first ECU **4** and the second ECU **5** may be convenient to adapt the electrical power of the electric brake actuator **3b** and the pneumatic force of the pneumatic brake actuator **3a** to each other. The activation of the non-hybrid brake actuators, like the traditional pneumatic brake actuators **10,** through the brake pedal **7,** is performed through the second ECU **5,** using exclusively the pneumatic energy.

Above and below, the terms "bi-energy brake actuator" means a hybrid brake actuator which is activated by 2 different energies selected from the pneumatic energy, the hydraulic energy and the electric energy. The bi-energy brake actuator of the present invention is preferably activated by electric energy or pneumatic energy or a combination of both electric and pneumatic energies simultaneously.

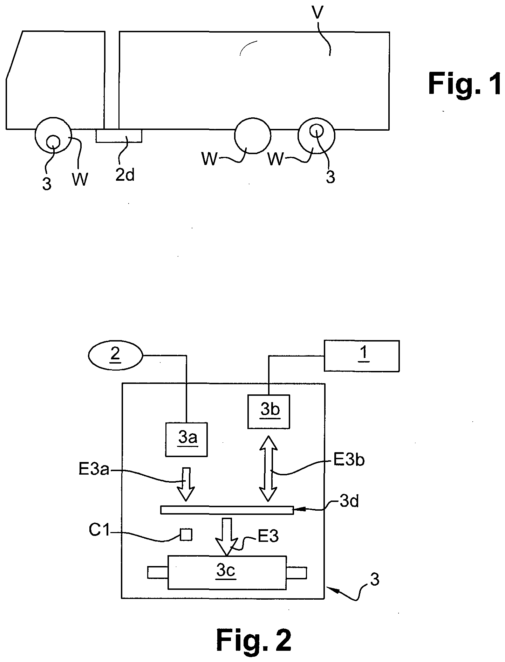

The braking arrangement of the present invention comprises at least a pair of bi-energy brake actuators **3.** The pair of bi-energy brake actuators **3** may be on a front axle or on a rear axle. Several axles, such as one front and one rear axle of the vehicle **V,** may be provided with a pair of bi-energy brake actuators **3,** as shown on Figure 1. It is also possible that all the axles of the vehicle V are provided with a pair of the hybrid actuators **3.**

The bi-energy brake actuator **3** is preferably the brake actuator described in the patent application PCT/EP2014/001813. The electric brake actuator **3b** is preferably not reversible, or bi-stable, which means that it needs energy to be withdrawn. That is materialized by the double-headed arrow **E3b,** showing the action of the electric brake actuator **3b** on the brake caliper **3c.** A piston position sensor **C1** may be provided to determine the position of the brake piston of each bi-energy actuator. A piston position sensor **C1** may also be present on the traditional pneumatic brake actuators **10.** Each electric brake actuator **3b** is powered by the electric power supply unit **1** of the vehicle V. Each pneumatic brake actuator **3a** is supplied with compressed air that is delivered by the compressed air supply unit **2.** In case of a vehicle train comprising a truck and at list one trailer, brake actuators of the truck and of the trailer, are at least powered with compressed air delivered by the compressed air supply unit **2.**

It is contemplated that, under normal running conditions, the bi-energy brake actuators **3** are activated by both electrical actuators **3b** and pneumatic actuators **3a** simultaneously. The "normal running conditions" should be understood as non-failure conditions, or safe conditions, wherein the braking system does not suffer from any defect. Under these circumstances, the bi-energy brake actuators **3** receive a part of the brake power from the compressed air supply unit **2** and the remaining brake power from the electrical actuator **3b.** In this configuration, the compressed air supply unit **2** may be downsized, compared to a traditional pneumatic system, as mentioned above.

Alternatively, the bi-energy brake actuators **3** may be activated only by the compressed air supply unit **2,** for smooth braking phases under normal conditions, and activated by both pneumatic brake actuators **3a** and electric brake actuator **3b** if more braking power is required. In particular, slowing down the vehicle, in absence of immediate danger, may be performed only with the pneumatic energy. Complementary energy may be provided by the electrical power if the brake pedal **7** is further pressed. Under these conditions, the compressed air supply unit **2** may be downsized, compared to the traditional pneumatic systems, as mentioned above.

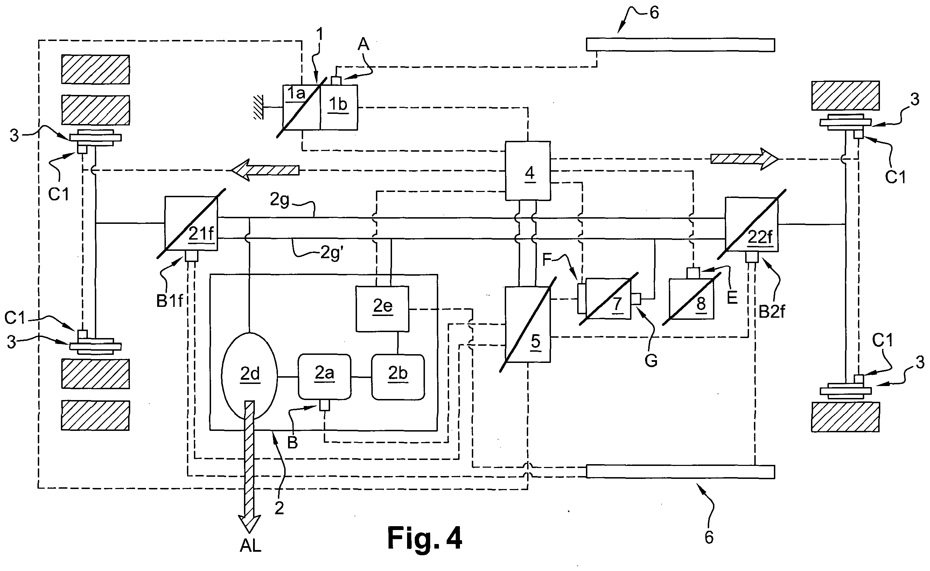

It is also contemplated that the electrical actuators **3b** is activated or over-activated in case of failure of the brake system. Failure of the brake system includes in particular air leakage **AL,** default of one or the other ECUs **4** and **5,** default of the brake pedal **7** or its brake pedal sensor module **F,** default of the parking brake handle **8** or its sensor **E.** However, the above defaults are not an exhaustive list, and other failures may occur that can be compensated thanks to the electrical redundancy of the present brake arrangement. Figure 4 will explain in more details how the brake failures can be circumvented.

The braking system may be arranged according to various preferences, with various degrees of redundancy between the electrical circuit and the pneumatic circuit, depending on the expected safety level. In particular, any pneumatic backup element of the braking system may be either replaced by a corresponding electric element, or doubled by such an electric element. Further, each pneumatic element which comprises several functions may be simplified, if some of the corresponding functions are operated by the electric brake actuation.

Thanks to the brake arrangement of the present invention, several failures may be overcome, as depicted in Figure 4. In case the failure consists in a lack of air pressure, the electric brake actuators **3b** may be activated, or over-activated, in such a way that the wheels equipped with a hybrid brake actuator **3** receive the proper braking force. The lack of pressure may be due to an air leakage **AL** within the pneumatic circuit, or default of the compressor **2b,** or because of trouble elsewhere within the compressed air supply unit **2.** The air supply sensor **B** or one or more of the pneumatic sensors **B1f** and **B2f** may detect the air pressure default and communicate it to the second ECU **5.** Thanks to the interconnection between the first ECU **4** and the second ECU **5,** a rapid change in the brake settings may occur, that allow to activate or overactivate the electric brake actuators **3b.** Alternatively the failure information may be transmitted through the high speed data bus **6** of the vehicle.

In this context, the terms "over-activated" means that the part of the braking power coming from the electrical actuators **3b** is increased with respect to the normal conditions. Where the normal conditions are such that only the pneumatic energy is used to brake the vehicle **V,** then the brake actuators **3** may be simply "activated" through the electrical actuators **3b** in case of failure. The activation or over-activation of the electrical actuators **3b** may provide a braking force complementary to the pneumatic braking force or the complete braking force. In the last case, the electric brake actuators 3b should be designed in such a way to provide enough braking power to stop the vehicle V.

The braking power provided by the electrical actuators **3b** may be adapted to the load status of the vehicle for each wheel. In particular, the sensors **C1** and **C2** allow to adapt the braking force of each electrical actuator **3b** according to the speed of rotation of the corresponding wheel.

In case the failure comes from the second ECU **5,** as mentioned by the corresponding cross bar in figure 4, the braking signal may not be transmitted from the brake pedal **7** to the EBS modules **21f** and **22f.** Under these circumstances, the first ECU **4** takes the lead and induces the activation or the over-activation of the electrical brake actuators **3b.** As above described, each wheel of the vehicle **V** equipped with such a bi-energy brake actuator **3** is independently controlled and can be individually managed by the mean of the corresponding sensors **C1** and **C2.**

If the brake pedal **7** or its sensor module **F** fails, as shown in the corresponding cross bar in figure 4, then the parking brake handle **8** can still be used to activate the brake actuators **3,** through ECU **4.** Thus, the brake will be activated through the electric brake actuator **3a.**

In case only one of the two brake pedal sensors, comprised in the brake pedal sensor module **F,** is out of order, no failure mode may be initiated. However, an alert message may be delivered to the driver.

In case of failure within the park brake **8** handle or its sensor **E,** the backup braking effect may be provided by the braking pedal **7.** Alternatively, an automatic mode may be provided, to automatically apply and automatically release the parking brake actuators.

In case the power supply unit 1 is out of order despite the 2 distinct power supply devices 1a and 1b, none of the first ECU 4 and the second ECU 5 can be activated. However, the pneumatic backup pipe assembly 2g' may provide the necessary braking energy to stop the vehicle V.

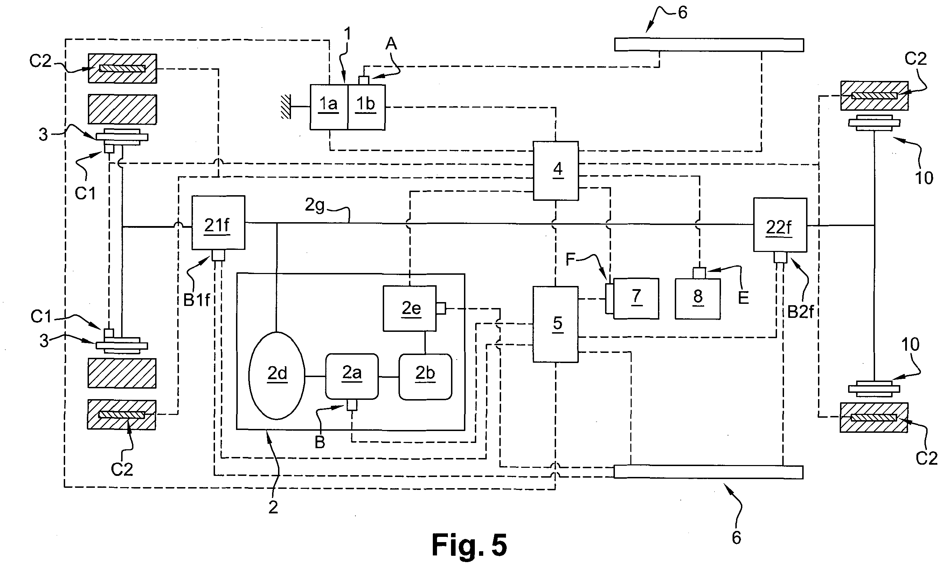

Exemplified specific brake arrangements are provided here below for illustrative purpose. The following examples are not intended to limit the scope of the present invention to those specific arrangements. Although figures 5 to 8 show a vehicle with 2 axles, the brake arrangement of the present invention may be applied to vehicle having more than 2 axles, like for example one front axle and 2 rear axles, or 2 front axles and 2 rear axles. In that case, any additional axle may or may not be equipped with bi-energy brake actuators 3.

A first example corresponds to figure 5, wherein the braking arrangement or system o comprises :
- A power supply unit **1** with at least 2 power supply devices **1a** and **1b.**
- a pair of hybrid brake actuators **3** at a rear axle, each brake actuator **3** comprising a pneumatic brake actuator **3a** and an electrical brake actuator **3b,**
- a pair of traditional pneumatic actuators **10** at other axles, like a front axle and optionally any additional rear axles,
- a compressed air supply unit **2,** comprising
   ∘ a common air reservoir **2d** which feeds the hybrid brake actuators **3** of the rear axle, as well as the traditional brake actuators **10** of the other axles through a pipe assembly **2g,**
   ∘ an optional electric TCM **2e**
   and being in fluidic connection with an EBS module **21f** at the rear axle and an EBS module **22f** at a front axle, wherein both EBS modules **21f, 22f** are simple EBS modules, without pneumatic backup valve,
wherein the brake arrangement further comprises
- a brake pedal **7,** having a brake pedal sensor module **F,** and wherein the pneumatic backup is absent,
- an electro mechanic parking brake handle **8,** comprising a sensor **E,**
- at least one wheel sensor **C2,**
- a first ECU **4,** supplied by the power supply unit **1,** and connected to both electric brake actuators **3b** of the rear axle, to the optional TCM **2e,** to the brake pedal sensor module **F** of the brake pedal **7,** to the sensor **E** of the park brake handle **8,** and further connected to at least the wheel sensors **C2** of the wheels equipped with a bi-energy actuator **3,** and to the piston position sensor **C1** of the bi-energy actuators 3.
- a second ECU **5,** supplied by the power supply unit **1,** and connected to the front EBS module **22f** and to the rear EBS module **21f,** to the brake pedal sensor module **F** of the brake pedal **7,** and optionally connected to the APM **2a.**

The reservoir **2d** of the compressed air supply unit **2** has advantageously a reduced volume compared to a traditional pneumatic brake system. Also, the compressor **2b** may be downsized as described above. The compressed air supply unit **2** does not feed the brake pedal **7** with compressed air. In other words, there is no pneumatic back up system related to the brake pedal **7** but only an electrical back up system.

Both supply unit **1a** and **1b** are preferably connected to the ECU **4** and ECU **5.** Alternatively, both power supply devices **1a** and **1b** may be connected to the ECU **4** and only one of the power supply device 1a or 1b is connected to the ECU **5.**

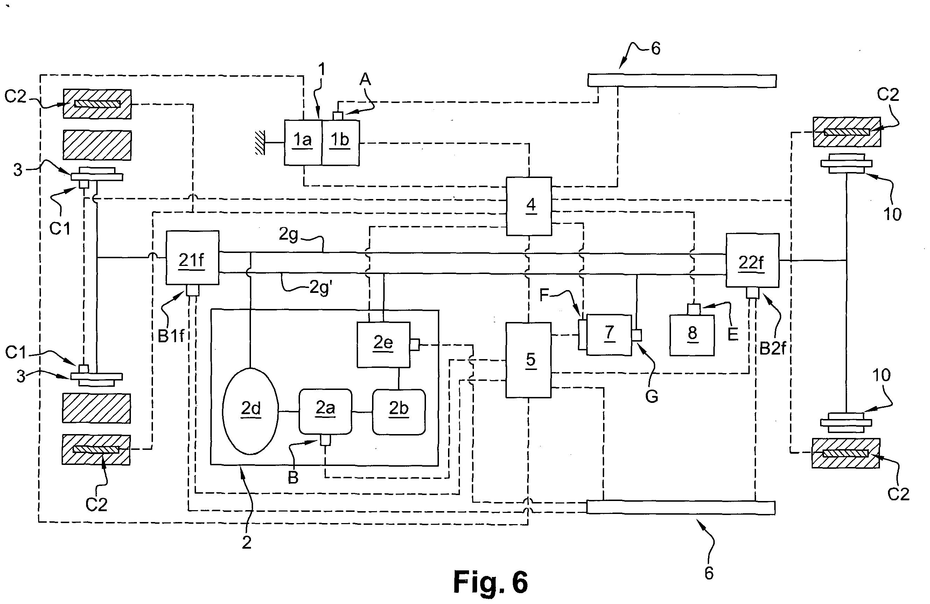

A second example is depicted in figure 6. The brake arrangement comprises, in addition to the previous example, a pneumatic backup line which feeds the brake pedal **7** by the mean of a backup valve **G,** and one or more of the EBS module **21f, 22f.** According to this configuration, the EBS module of the front axle **22f ,** and the brake pedal **7,** are supplied through a pneumatic backup pipe assembly ***2g'*.** In other words, the braking arrangement of this second example comprises:
- A power supply unit **1** with at least 2 power supply devices **1a** and **1b,**
- a pair of hybrid brake actuators **3** at a rear axle, each brake actuator **3** comprising a pneumatic brake actuator **3a** and an electrical brake actuator **3b,**
- a pair of traditional pneumatic actuators **10** at other axles, like the front axle or front axles and optionally any additional rear axle,
- a compressed air supply unit **2,** comprising
   ∘ a common air reservoir **2d** which feeds the hybrid brake actuators **3** of the rear axle, as well as the traditional brake actuators **10** of the other axles, and in particular the front axle, through a pipe assembly **2g,**
   ∘ an optional electric TCM **2e,**
   and being in fluidic connection with an EBS module **21f** at the rear axle and an EBS module **22f** at the front axle, wherein both EBS modules **21f** and **22f** are simple EBS modules, wherein the first EBS module **21f** at the rear axle, does not comprise a pneumatic backup valve, and wherein the second EBS module **22f** at the front axle, does contain a pneumatic backup valve,
wherein the brake arrangement further comprises
- a brake pedal **7,** comprising a brake pedal sensor module **F,** and a pneumatic backup valve **G,**
- an electro mechanic parking brake handle **8,** comprising a sensor **E,**
- at least a wheel sensor **C2,**
- A backup pipe assembly ***2g*'** in fluidic connection with the reservoir **2d,** the pneumatic backup valve **G** of the brake pedal **7** and the EBS modules 21f, **22f**
- a first ECU **4,** supplied by the power supply unit **1,** and connected to both electric brake actuators **3b** of the rear axle, to the optional TCM **2e,** to the brake pedal sensor module **F** of the brake pedal **7,** to the sensor **E** of the park brake handle **8,** and further connected to at least the wheel sensors **C2** of the wheels equipped with a bi-energy actuator **3,** and to the piston position sensor **C1** of the bi-energy actuators 3.
- a second ECU **5,** supplied by the power supply unit **1,** and connected to the front EBS module **22f** and to the rear EBS module **21f,** to the brake pedal sensor module **F** of the brake pedal **7,** and optionally connected to the APM **2a.**

According to this configuration, all the wheels can still be brakes in case of a failure of the power supply unit 1, as explained above.

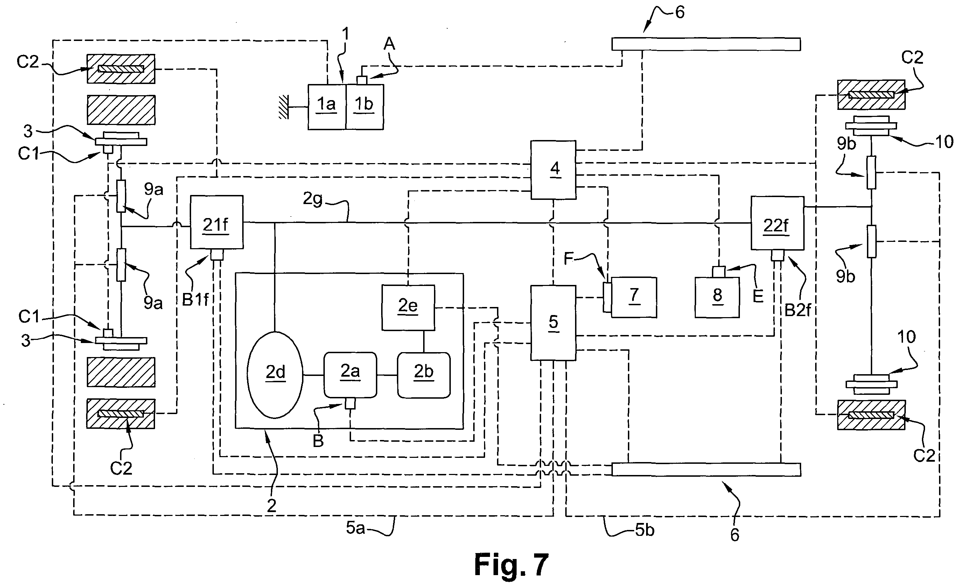

A third example is shown in Figure 7, wherein additional ABS valves **9a, 9b** are added either on a rear axle or on a front axle, or both of them. Such an arrangement may comprise for example:
- A power supply unit **1** with at least 2 power supply devices **1a** and **1b,**
- a pair of hybrid brake actuators **3** at a rear axle, each brake actuator **3** comprising a pneumatic brake actuator **3a** and an electrical brake actuator **3b,**
- a pair of traditional pneumatic actuators **10** at the other axles, including a front axle and optionally any additional rear axles,
- a compressed air supply unit **2,** comprising
   ∘ a common air reservoir **2d** which feeds the hybrid brake actuators **3** of the rear axle, as well as the traditional brake actuators 10 of the other axles, and in particular the front axle, through a pipe assembly ***2g,***
   ∘ an optional electric TCM **2e,**
   and being in fluidic connection with
   ∘ an EBS module **21f** at the rear axle and an EBS module **22f** at the front axle, wherein both EBS modules are simple EBS modules, without pneumatic backup valve,
   ∘ 2 ABS valves **9b** on the front axle and optionally 2 ABS valves **9a** on the rear axle,

Wherein the brake arrangement further comprises
- a brake pedal **7,** comprising a brake pedal sensor module **F,** without pneumatic backup,
- an electro mechanic parking brake handle **8,** comprising a sensor **E,**
- at least one wheel sensor **C2,**
- a first ECU **4,** supplied by the power supply unit **1,** and connected to both electric brake actuators **3b,** to the optional TCM **2e,** to the brake pedal sensor module **F** of the brake pedal **7,** to the sensor **E** of the park brake handle **8,** and further connected to at least the wheel sensors **C2** of the wheels equipped with a bi-energy actuator **3,** and to at least the piston position sensor **C1** of the bi-energy actuators 3.
- a second ECU **5,** supplied by the power supply unit **1,** and connected to the front EBS module **22f** and to the rear EBS module **21f,** to the brake pedal sensor module **F** of the brake pedal **7,** to the pairs of pneumatic ABS valves **9a, 9b,** and optionally connected to the APM **2a.**

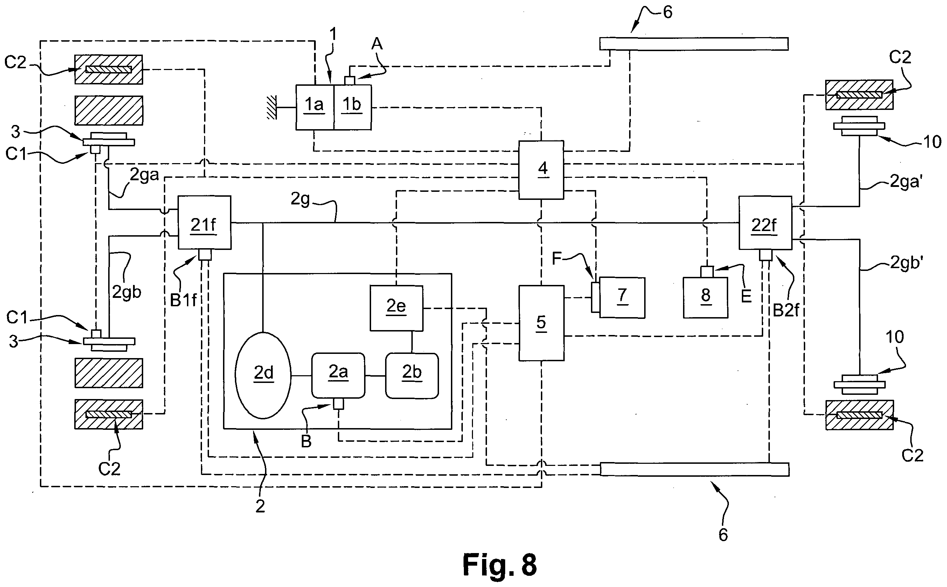

A fourth configuration is drawn in Figure 8, wherein the brake arrangement comprises one or more double electronic brake system modules **21f, 22f** instead of simple ones. In particular, such an arrangement may comprise:
- A power supply unit **1** with at least 2 power supply devices **1a** and **1b,**
- a pair of hybrid brake actuators **3** at a rear axle, each brake actuator **3** comprising a pneumatic brake actuator **3a** and an electrical brake actuator **3b,**
- a pair of traditional pneumatic actuators **10** at other axles, including a front axle and optionally any additional rear axles,
- a compressed air supply unit **2,** comprising
   ∘ a common air reservoir **2d** which feeds the hybrid brake actuators **3,** as well as the traditional brake actuators 10 of the other axles, and in particular the front axle, through a pipe assembly **2g,**
   ∘ an optional electric TCM **2e,**
   and being in fluidic connection with an EBS module **21f** at the rear axle and an EBS module **22f** at the front axle, wherein both EBS modules **21f** and **22f** are double EBS modules, without pneumatic backup valve,
wherein the brake arrangement further comprises
- a brake pedal **7,** comprising a brake pedal sensor module **F,** without pneumatic backup,
- an electro mechanic parking brake handle **8,** comprising a sensor **E,**
- at least a wheel sensor **C2,**
- Separate air pipes **2ga', 2gb'** at the front axle and optionally separate pipes **2ga** and **2gb** at the rear axle.
- a first ECU **4,** supplied by the power supply unit **1,** and connected to both electric brake actuators **3b,** to the TCM **2e,** to the brake pedal sensor module **F** of the brake pedal **7,** and to the sensor **E** of the park brake handle **8,** and further connected to at least the wheel sensors **C2** of the wheels equipped with a bi-energy actuator **3,** and at least to the piston position sensor **C1** of the bi-energy actuators **3**
- a second ECU **5,** supplied by the power supply unit **1,** and connected to the front EBS module **22f** and to the rear EBS module **21f,** to the brake pedal sensor module **F** of the brake pedal **7,** and optionally connected to the APM **2a.**

It is also contemplated a combination of the above exemplified arrangements. For example, a brake arrangement according to the present invention may combine a backup pipe assembly ***2g'*,** feeding the brake pedal **7** and one or more of the electronic brake system module **21f, 22f,** with 2 or more pairs of ABS valves **9a,9b.** A backup pipe assembly ***2g'*,** as described above, may alternatively be combined with one or more double electronic brake system modules **21f, 22f.**

A braking method is also part of the present invention wherein pneumatic brake actuators **(3a, 10)** and electric brake actuators 3b are both activated, and wherein the electric brake actuators **3b** are over activated in case of failure of the pneumatic brake system. In particular, partial or total braking force can be provided with bi-energy brake actuators **3b.** The braking method comprises the steps of :
a) activating the pneumatic brake actuators **(3a, 10),**
b) activating the electric brake actuators **3b**
c) detecting a failure within the pneumatic brake system
d) over-activating the electric brake actuators **3b.**

The steps a) and b) may be concomitant or sequential. The method above described is particularly convenient when failure is selected from an air leakage, default of the ECU **4** and/or **5,** default of the brake pedal **7** or its pedal sensor module **F,** default of the parking brake handle **8,** or its sensor **E,** default of one or more of the EBS modules **21f, 22f.**

## Claims

1. A braking arrangement comprising :
- an electrical power supply unit (1),
- a compressed air supply unit (2), comprising an air reservoir (2d), and optionally a TCM (2e), and being in fluidic connection with one or more electronic brake system modules (21f, 22f),
- a brake pedal (7) comprising a brake pedal sensor module (F),
- an electro mechanic parking brake handle (8), comprising a sensor (E),
- at least one wheel sensor (C2),
- at least one bi-energy brake actuator (3), comprising a pneumatic brake actuator (3a) and an electric brake actuator (3b), and activated by one or more of the electrical power supply unit (1) and the compressed air supply unit (2), wherein the pneumatic brake actuator (3a) and the electric brake actuator (3b) generate respectively a first effort (E3a) and a second effort (E3b) that can be applied on a transfer module (3d)
- a first braking system control unit (ECU 4), and a second braking system control unit (ECU 5), wherein :
the first (ECU 4) is supplied by the electrical power supply unit (1) and is connected to the at least one bi-energy brake actuator (3), the optional TCM (2e), the brake pedal sensors module (F), and the at least one wheel sensor (C2), and
the second (ECU 5) is supplied by the electrical power supply unit (1) and is connected to one or more electronic brake system module (21f, 22f) and the brake pedal sensor module (F) **characterized in that** the effort (E3) transmitted on the transfer module (3d) is the sum of the first (E3a) and second (E3b) efforts, the transfer module (3d) allowing the adding up of the efforts delivered by the the pneumatic brake actuator (3a) and the electric brake actuator (3b).

2. The brake arrangement according to claim 1, wherein the reservoir (2d) of said compressed air supply unit (2) is in fluidic connection with the pneumatic brake actuators of all the axles of the vehicle, including those of the front axles, and those of the rear axles.

3. The braking arrangement according to claims 1 or 2, wherein the electrical power supply unit (1) comprises two separate power supply devices (1a and 1b), wherein at least one of the power supply device is equipped with an electrical supply sensor (A).

4. The brake arrangement according to any one of the preceding claims, wherein said brake arrangement comprises one pair of bi-energy brake actuators (3) at a rear axle, and traditional pneumatic brake actuators (10) at the other axles.

5. The brake arrangement according to any one of the preceding claims, wherein the one or more electronic brake system modules (21f, 22f) are simple electronic brake system modules.

6. The brake arrangement according to any one of the preceding claims, further comprising a backup pipe assembly (2g') and wherein the brake pedal (7) comprises a backup valve (G).

7. The brake arrangement according to any one of the preceding claims, further comprising a pair of ABS valves (9a, 9b) on at least one axle.

8. The brake arrangement according to claim 7, wherein the pair of ABS valves (9b) is provided on a front axle.

9. A brake arrangement according to claim 1 to 4, and 6 to 8, wherein one or more of the electronic brake system modules (21f, 22f) are double EBS modules.

10. A brake arrangement according to the claim 9, wherein the EBS module (21f) of the rear axle is a simple EBS module and wherein the EBS module (22f) of the front axle is a double EBS module.

11. A braking method comprising the steps of
a) activating the pneumatic brake actuators (3a, 10), of the brake arrangement of claims 1 to 10,
b) activating the electric brake actuators (3b), of the brake arrangement of claims 1 to 10,
c) detecting a failure within the pneumatic brake system, and
d) over-activating the electric brake actuators (3b).

12. A braking method according to claim 11, wherein the failure is selected from an air leakage, default of the ECU (4) and/or (5), default of the brake pedal (7) or its pedal sensor module (F), default of the parking brake handle (8), or its sensor (E), default of one or more of the EBS modules: (21f, 22f).

13. A vehicle comprising at least one wheel equipped with a bi-energy brake actuator (3), comprising a pneumatic brake actuator (3a) and an electrical brake actuator (3b), and activated by an electrical power supply unit (1) and a compressed air supply unit (2), and the braking arrangement defined in claims 1 to 10.

## Patentansprüche

1. Bremsvorrichtung aufweisend:
- eine elektrische Stromversorgungseinheit (1),
- eine Druckluftversorgungseinheit (2) aufweisend einen Luftbehälter (2d), und optional ein TCM (2e), und in Fluidverbindung seiend mit einem oder mehreren elektronischen Bremssystemmodulen (21f, 22f),
- ein Bremspedal (7) aufweisend ein Bremspedal-Sensormodul (F),
- einen elektromechanischen Feststellbremsgriff(8), aufweisend einen Sensor (E),
- mindestens einen Radsensor (C2),
- mindestens einen Bi-Energie-Bremsaktuator (3), aufweisend einen pneumatischen Bremsaktuator (3a) und einen elektrischen Bremsaktuator (3b) und betätigt durch eine oder mehrere der elektrischen Stromversorgungseinheiten (1) und der Druckluftversorgungseinheit (2), wobei der pneumatische Bremsaktuator (3a) und der elektrische Bremsaktuator (3b) jeweils eine erste Kraft (E3a) und eine zweite Kraft (E3b) erzeugen, die auf ein Übertragungsmodul (3d) aufgebracht werden können,
- eine erste Bremssystem-Steuereinheit (ECU 4), und eine zweite Bremssystem-Steuereinheit (ECU 5), wobei die erste (ECU 4) von der elektrischen Stromversorgungseinheit (1) gespeist wird und verbunden ist mit dem mindestens einen Bi-Energie-Bremsaktuator (3), dem optionalen TCM (2e), dem Bremspedal-Sensormodul (F), und dem mindestens einen Radsensor (C2), und die zweite (ECU 5) von der elektrischen Stromversorgungseinheit (1) gespeist wird und verbunden ist mit einem oder mehreren elektronischen Bremssystemmodulen (21f, 22f) und dem Bremspedal-Sensormodul (F),
**dadurch gekennzeichnet, dass**
- die auf das Übertragungsmodul (3d) übertragene Kraft (E3) die Summe der ersten (E3a) und zweiten (E3b) Kräfte ist, wobei das Übertragungsmodul (3d) die Addition der von dem pneumatischen Bremsaktuator (3a) und dem elektrischen Bremsaktuator (3b) bereitgestellten Kräfte ermöglicht.

2. Bremsvorrichtung nach Anspruch 1, wobei der Behälter (2d) der Druckluftversorgungseinheit (2) in Fluidverbindung mit den pneumatischen Bremsaktuatoren aller Achsen des Fahrzeugs ist, einschließlich derer der Vorderachsen und derer der Hinterachsen.

3. Bremsvorrichtung nach Anspruch 1 oder 2, wobei die elektrische Stromversorgungseinheit (1) zwei separate Stromversorgungsvorrichtungen (1a, 1b) aufweist, wobei mindestens eine der Stromversorgungsvorrichtungen mit einem elektrischen Versorgungssensor (A) ausgestattet ist.

4. Bremsvorrichtung nach einem der vorstehenden Ansprüche, wobei die Bremsvorrichtung ein Paar Bi-energie-Bremsaktuatoren (3) an einer Hinterachse und herkömmliche pneumatische Bremsaktuatoren (10) an den anderen Achsen aufweist.

5. Bremsvorrichtung nach einem der vorstehenden Ansprüche, wobei das eine oder die mehreren elektronischen Bremssystemmodule (21f, 22f) einfache elektronische Bremssystemmodule sind.

6. Bremsvorrichtung nach einem der vorstehenden Ansprüche, ferner aufweisend eine Sicherungsrohranordnung (2g') und wobei das Bremspedal (7) ein Sicherungsventil (G) aufweist.

7. Bremsvorrichtung nach einem der vorstehenden Ansprüche, ferner aufweisend ein Paar ABS-Ventile (9a, 9b) an mindestens einer Achse.

8. Bremsvorrichtung nach Anspruch 7, wobei das Paar ABS-Ventile (9b) an einer Vorderachse bereitgestellt ist.

9. Bremsvorrichtung nach Ansprüchen 1 bis 4 und 6 bis 8, wobei eines oder mehrere der elektronischen Bremssystemmodule (21f, 22f) Doppel-EBS-Module sind.

10. Bremsvorrichtung nach Anspruch 9, wobei das EBS-Modul (21f) der Hinterachse ein einfaches EBS-Modul ist und wobei das EBS-Modul (22f) der Vorderachse ein Doppel-EBS-Modul ist.

11. Verfahren zum Bremsen aufweisend die Schritte
a) Aktivieren der pneumatischen Bremsaktuatoren (3a, 10) der Bremsvorrichtung nach Ansprüchen 1 bis 10,
b) Aktivieren der elektrischen Bremsaktuatoren (3b) der Bremsvorrichtung nach Ansprüchen 1 bis 10,
c) Erkennen einer Störung innerhalb des pneumatischen Bremssystems, und
d) Überaktivieren der elektrischen Bremsaktuatoren (3b).

12. Verfahren zum Bremsen nach Anspruch 11, wobei die Störung ausgewählt wird aus einer Luftleckage, Ausfall der ECU (4) und/oder (5), Ausfall des Bremspedals (7) oder dessen Pedal-Sensormoduls (F), Ausfall des Feststellbremsgriffes (8) oder dessen Sensor (E), Ausfall eines oder mehrerer der EBS-Module (21f, 22f).

13. Fahrzeug aufweisend mindestens ein Rad ausgestattet mit einem Bi-Energie-Bremsaktuator (3) aufweisend einen pneumatischen Bremsaktuator (3a) und einen elektrischen Bremsaktuator (3b), und betätigt durch eine elektrische Stromversorgungseinheit (1) und eine Druckluftversorgungseinheit (2), und die Bremsvorrichtung definiert in Ansprüchen 1 bis 10.

## Revendications

1. Agencement de frein comprenant :
- une unité d'alimentation en énergie électrique (1),
- une unité d'alimentation en air comprimé (2), comprenant un réservoir d'air (2d) et, facultativement, un TCM (2e) et étant en connexion fluidique avec un ou plusieurs modules électroniques de système de frein (21f, 22f),
- une pédale de frein (7) comprenant un module de capteur de pédale de frein (F),
- une poignée de frein de parking électromécanique (8) comprenant un capteur (E),
- au moins un capteur de roue (C2),
- au moins un actionneur de frein biénergie (3) comprenant un actionneur de frein pneumatique (3a) et un actionneur de frein électrique (3b), et activé par une ou plusieurs parmi l'unité d'alimentation en énergie électrique (1) et l'unité d'alimentation en air comprimé (2), dans lequel l'actionneur de frein pneumatique (3a) et l'actionneur de frein électrique (3b) génèrent respectivement un premier effort (E3a) et un second effort (E3b) pouvant être appliqués à un module de transfert (3d),
- une première unité de commande de système de freinage (ECU 4) et une seconde unité de commande de système de freinage (ECU 5), dans lequel :
la première (ECU 4) est alimentée par l'unité d'alimentation en énergie électrique (1) et est reliée à l'au moins un actionneur de frein biénergie (3), au TCM facultatif (2e),
au module de capteur de pédale de frein (F) et à l'au moins un capteur de roue (C2), et
la seconde (ECU 5) est alimentée par l'unité d'alimentation en énergie électrique (1) et est reliée aux un ou plusieurs modules électroniques de système de frein (21f, 22f) et au module de capteur de pédale de frein (F),
**caractérisé en ce que** l'effort (E3) transmis sur le module de transfert (3d) est la somme du premier effort (E3a) et du second effort (E3b), le module de transfert permettant l'addition des efforts fournis par l'actionneur de frein pneumatique (3a) et l'actionneur de frein électrique (3b).

2. Agencement de frein selon la revendication 1, dans lequel le réservoir (2d) de ladite unité d'alimentation en air comprimé (2) est en connexion fluidique avec les actionneurs de frein pneumatique de tous les essieux du véhicule, y compris ceux des essieux avant et ceux des essieux arrière.

3. Agencement de frein selon la revendication 1 ou 2, dans lequel l'unité d'alimentation en énergie électrique (1) comprend deux dispositifs d'alimentation en énergie (1a et 1b) distincts, dans lequel au moins l'un des dispositifs d'alimentation en énergie est équipé d'un capteur d'alimentation électrique (A).

4. Agencement de frein selon l'une quelconque des revendications précédentes, dans lequel ledit agencement de frein comprend une paire d'actionneurs de freins biénergie (3) sur un essieu arrière, et des actionneurs de freins pneumatiques traditionnels (10) aux autres essieux.

5. Agencement de frein selon l'une quelconque des revendications précédentes, dans lequel les un ou plusieurs modules électroniques de système de frein (21f, 22f) sont des modules électroniques simples de système de frein.

6. Agencement de frein selon l'une quelconque des revendications précédentes, comprenant en outre un ensemble tuyau auxiliaire (2g'), et dans lequel la pédale de frein (7) comprend une vanne auxiliaire (G).

7. Agencement de frein selon l'une quelconque des revendications précédentes, comprenant en outre une paire de vannes ABS (9a, 9b) sur au moins un essieu.

8. Agencement de frein selon la revendication 7, dans lequel la paire de vannes ABS (9b) est prévue sur un essieu avant.

9. Agencement de frein selon les revendications 1 à 4, et 6 à 8, dans lequel un ou plusieurs parmi les modules électroniques de système de frein (21f, 22f) sont des modules EBS doubles.

10. Agencement de frein selon la revendication 9, dans lequel le module EBS (21f) de l'essieu arrière est un module EBS simple et dans lequel le module EBS (22f) de l'essieu avant est un module EBS double.

11. Procédé de freinage comprenant les étapes de
a) l'activation des actionneurs de freins pneumatiques (3a, 10) de l'agencement de frein selon les revendications 1 à 10,
b) l'activation des actionneurs de freins électriques (3b) de l'agencement de frein selon les revendications 1 à 10,
c) la détection d'une défaillance dans le système de frein pneumatique, et
d) la sur-activation des actionneurs de freins électriques (3b).

12. Procédé de freinage selon la revendication 11, dans lequel la défaillance est sélectionnée parmi une fuite d'air, un défaut de l'ECU (4) et/ou (5), un défaut de la pédale de frein (7) ou de son module de capteur de pédale (F), un défaut de la poignée de frein de praking (8) ou de son capteur (E), un défaut d'un ou plusieurs parmi les modules EBS (21f, 22f).

13. Véhicule comprenant au moins une roue pourvue d'un actionneur de frein biénergie (3), comprenant un actionneur de frein pneumatique (3a) et un actionneur de frein électrique (3b), et activé par une unité d'alimentation en énergie électrique (1) et une unité d'alimentation en air comprimé (2), et l'agencement de frein selon les revendications 1 à 10.
